# EUROPÄISCHE PATENTSCHRIFT

(11) **EP 1 791 704 B1**
(45) Veröffentlichungstag und Bekanntmachung des Hinweises auf die Patenterteilung: **08.07.2009**
(21) Anmeldenummer: 05773738.9
(22) Anmeldetag: 01.09.2005
(51) Int. Cl.: B60C 27/20, B60C 27/06

(54) **GLEITSCHUTZVORRICHTUNG FÜR FAHRZEUGRÄDER**
ANTI-SKID DEVICE FOR VEHICLE WHEELS
DISPOSITIF ANTI-GLISSEMENT DESTINE A DES ROUES DE VEHICULE

(30) Priorität: 21.09.2004 CH 154504
(43) Veröffentlichungstag der Anmeldung: 06.06.2007
(73) Patentinhaber: Confon AG, CH-9424 Rheineck (CH)
(72) Erfinder: PREUSKER, Werner, 88605 Sauldorf (DE)
(74) Vertreter: Gachnang, Hans Rudolf
(86) Internationale Anmeldenummer: PCT/CH2005/000514
(87) Internationale Veröffentlichungsnummer: WO 2006/032155

(56) Entgegenhaltungen:
- EP-A- 0 911 193
- US-A- 4 799 522

## Beschreibung

Gegenstand der Erfindung ist eine Gleitschutzvorrichtung für Fahrzeugräder gemäss Oberbegriff des Patenanspruchs 1. Gleitschutzvorrichtungen für Fahrzeugräder dienen einerseits im Winter als Schneeketten und andererseits können auch die Reifen von Arbeitsfahrzeugen mit Ketten ausgerüstet werden, um beispielsweise bei einer Benutzung in Steinbrüchen die Reifen vor vorzeitiger Zerstörung durch scharfkantige Steine zu schützen. Die vorliegende Erfindung bezieht sich insbesondere auf Gleitschutzvorrichtungen für die Benutzung im Schnee und/oder auf Eis. Bei der hier zur Diskussion stehenden Gleitschutzvorrichtung handelt es sich um eine solche, die mit sternförmig an einem Stützring angeordneten Armen, welcher an der Felge des Fahrzeugrades drehbar gehalten wird.

Gleitschutzvorrichtungen der genannten Gattung sind bekannt.

Aus der US 4,799,522 ist eine gattungsbildende Gleitschutzvorrichtung für Fahrzeugräder bekannt, bei der auf der Reifenlauffläche ein leiterartiger Kettenpanzer angeordnet ist, welcher durch sternförmig mit dem Radzentrum verbundene Arme gehalten wird. An den freien Enden der Arme sind drahtförmige Bügel ausgebildet, welche mit den jeweils letzten Kettengliedern von Kettenabschnitten verbunden sind, welche den Kettenpanzer bilden. Die drahtförmigen Enden der Bügel müssen durch zusätzliche Umreifungen zusammengehalten werden, um die Zugkräfte der beiden Kettenstränge übernehmen zu können. Zudem sind die drahtförmigen Bügel einer dauernden dynamischen Belastung ausgesetzt, so dass die Gefahr von Drahtbrüchen die Sicherheit solcher Vorrichtungen in Frage stellt.

Eine Aufgabe der vorliegenden Erfindung ist die Schaffung einer Gleitschutzvorrichtung der genannten Gattung, welche die Nachteile der bekannten meidet und einen sehr einfachen, kostengünstig herstellbaren und weniger dem Verschleiss unterworfenen Aufbau aufweist.

Gelöst wird diese Aufgabe durch eine Gleitschutzvorrichtung gemäss den Merkmalen des Patentanspruchs 1. Besonders vorteilhafte Ausgestaltungen sind in den abhängigen Ansprüchen umschrieben.

Überraschenderweise gelingt es, durch eine frei bewegliche Verbindung zwischen einem Distanzstück, das die beiden Kettenstränge verbindet, und dem freien Ende des Haltebügels ohne radiale Vergrösserung des Durchmessers der Gleitschutzvorrichtung den Kettenpanzer exakt auf der Reifenlauffläche zu positionieren und zu führen.

Anhand eines illustrierten Ausführungsbeispiels wird die Erfindung näher erläutert. Es zeigen:
- Figur 1: eine Aufsicht auf eine auf einem Fahrzeugreifen aufgelegte Gleitschutzvorrichtung,
- Figur 2: eine vergrösserte Darstellung der Verbindung zwischen Haltebügel und Kettenpanzer und
- Figur 3: einen Schnitt längs Linie III-III in Figur 2 durch die Verbindung.

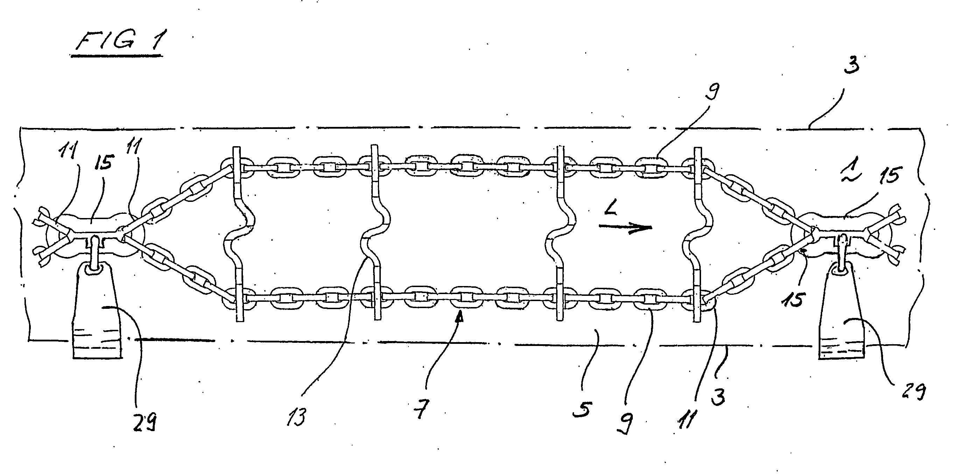

In Figur 1 ist in strichpunktierten Linien ein Reifen 1 mit seinen beiden Flanken 3 schematisch angedeutet. Auf der Lauffläche 5 des Reifens 1 liegt eine Gleitschutzvorrichtung 7, umfassend zwei jeweils abschnittsweise parallel verlaufende Kettenstränge 9 aus miteinander verbundenen Kettengliedern 11. Die beiden Kettenstränge 9 werden durch Distanzelemente 13 in gegenseitigem Abstand gehalten.

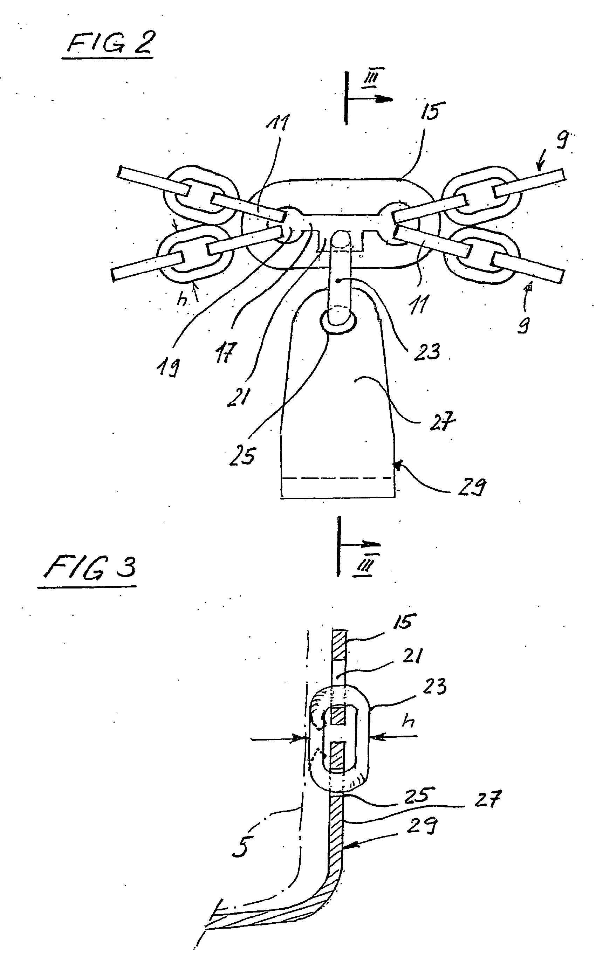

In regelmässigen Abständen, beispielsweise nach jeweils vier Distanzelementen werden die beiden Kettenstränge 9 auf ein Zwischenglied 15 zusammengeführt. Das Zwischenglied 15 umfasst eine längliche Ausnehmung 17, an deren seitlichen Enden jeweils eine vorzugsweise runde Bohrung 19 und in deren Mitte zwischen den Bohrungen 19 ein erweiterter Abschnitt 21 ausgebildet sind. In den beiden Bohrungen 19 werden jeweils die letzten Kettenglieder 11 der beiden Kettenstränge 9 gehalten. Im Abschnitt 21 greift ein Führungskettenglied 23 ein, welches zudem in einem Loch 25 am freien Ende 27 eines Haltebügels 29 angebracht ist (vergleiche insbesondere Figur 2). Das Führungskettenglied 23 liegt etwa lotrecht zur Laufrichtung L des Reifens. Die Höhe h des Führungskettenglieds, welches mit seiner einen Flanke auf der Lauffläche 5 des Reifens 1 aufliegt, ist im wesentlichen gleich wie die Höhe h der Kettenglieder 11 der Kettenstränge 9, welche ebenfalls am Zwischenglied 15 angreifen. Der besseren Übersichtlichkeit halber sind in Figur 3 die vom Zwischenglied 15 weglaufenden und mit dem Zwischenglied 15 verbundenen Kettenglieder 11 nicht dargestellt.

Der Haltebügel 29 ist in bekannter Weise mit seinem dem freien Ende 27 gegenüber liegenden Ende, das nicht dargestellt ist, mit dem am Rad drehbar befestigten Stützring verbunden.

Zwischen dem Haltebügel 29 und dem aus den beiden Kettensträngen 9 und den Distanzelementen 13 gebildeten Kettenpanzer entsteht durch das Führungskettenglied 23 eine gelenkige Verbindung. Dadurch dass das Zwischenglied 15 jeweils die beiden Kettenstränge 9 zusammenfasst, wird der Kettenpanzer, obwohl gelenkig mit dem Haltebügel 29 verbunden, präzise geführt. D.h. die beiden Kettenstränge 9 können sich in Laufrichtung L relativ zueinander nicht verschieben. Die Verbindung des Haltebügels 29 mit beiden Kettensträngen 9 bewirkt auch, dass nur geringe Kräfte vom Kettenpanzer auf die Haltebügel 29 ausgeübt werden. Im weiteren ist durch die jeweils gleiche Höhe h des Führungskettenglieds 23 sowie der Kettenglieder 11 des Kettenpanzers über der Reifenlauffläche 5 gewährleistet, dass auch an der Verbindungsstelle zwischen Haltebügel 29 und dem Kettenpanzer eine gleichmässige Auflage des Kettenpanzers und des Führungskettenglieds 23 auf der Fahrbahn erfolgt. Die Abnützung aller Kettenglieder 11,15 ist demzufolge stets gleich. Durch Verwendung eines offenen Führungskettenglieds 23, wie in gebrochenen Linien in Figur 3 angedeutet, kann der Kettenpanzer von den Haltebügeln 29 gelöst und gewendet werden, sobald ein entsprechender Verschleiss eingetreten ist.

## Patentansprüche

1. Gleitschutzvorrichtung für Fahrzeugräder, umfassend einen Kettenpanzer mit zwei ringförmigen, im wesentlichen in Reifenumfangsrichtung (L) auf der Reifenlauffläche (5) aufzuliegen bestimmten und den Reifen (1) umschlingende Kettensträngen (9), welche durch Distanzelemente (13) in einem gegenseitigen Abstand gehalten werden, sowie sternförmig auf einem drehbaren Stützring am Fahrzeugrad befestigte Haltebügel (29), deren freie Enden (27) mit je einem die beiden Kettenstränge (9) verbindenden Zwischenglied (15) verbunden sind, **dadurch gekennzeichnet, dass** das Zwischenglied (15) zwischen den beiden Kettensträngen (9) liegt und dass zwischen dem Zwischenglied (15) und dem freien Ende (27) der Haltebügel (29) ein Führungskettenglied (23) eingesetzt ist, welches den Haltebügel (29) und das Zwischenglied (15) gelenkig miteinander verbindet, derart, dass keine Wechsellasten vom Zwischenglied (15) auf die Haltebügel (29) übertragbar sind.

2. Gleitschutzvorrichtung nach Anspruch 1, **dadurch gekennzeichnet, dass** die Zwischenglieder (15) die Kettenstränge (9) kreuzförmig zusammenhalten.

3. Gleitschutzvorrichtung nach Anspruch 1, **dadurch gekennzeichnet, dass** die Zwischenglieder (15) eine Platte mit zwei beabstandet angebrachten Bohrungen (19) umfassen, in welche jeweils die letzten Kettenglieder (11) der beiden Kettenstränge (9) gehalten sind.

4. Gleitschutzvorrichtung nach Anspruch 3, **dadurch gekennzeichnet, dass** die Führungskettenglieder (23) in einer an der Platte angebrachten Ausnehmung (17) und einem Loch (25) am Ende (27) der Haltebügel (29) gehalten werden.

5. Gleitschutzvorrichtung nach einem der Ansprüche 1 bis 4, **dadurch gekennzeichnet, dass** die Führungskettenglieder (23) in sich geschlossen oder offen sind.

6. Gleitschutzvorrichtung nach einem der Ansprüche 1 bis 5, **dadurch gekennzeichnet, dass** die Höhe (h) der Führungskettenglieder (23) der Höhe (h) der Kettenglieder (11) der Kettenstränge (9) entspricht.

## Claims

1. An anti-skid device for vehicle wheels, comprising a chain arrangement with two annular chain strands (9) which are envisaged to come to lie on the tire running surface (5) essentially in the tire peripheral direction (L), embrace the tire (1) and are held at a mutual distance by way of distance elements (13), as well as retaining brackets (29) which are fastened in a star-like manner on a rotatable support ring on the vehicle wheel and whose free ends (27) are connected in each case to an intermediate link (15) connecting the two chain strands (9), **characterised in that** the intermediate link (15) lies between the two chain strands (9) and that a guide chain link (23) is inserted between the intermediate link (15) and the free end (27) of the retaining brackets (29), and connects the retaining bracket (29) and the intermediate link (15) to one another in an articulated manner and in a manner such that no alternating loads may be transmitted from the intermediate link (15) onto the retaining brackets (29).

2. An anti-skid device according to claim 1, **characterised in that** the intermediate members (15) hold the chain strands (9) together in a cross-like manner.

3. An anti-skid device according to claim 1, **characterised in that** the intermediate members (15) comprise a plate with two bores (19) which are incorporated at a distance to one another and into which the last chain links (11) of the two chain strands (9) are held.

4. An anti-skid device according to claim 3, **characterised in that** the guide chain links (23) are held in a recess (17) incorporated on the plate, and in a hole (25) at the end (27) of the retaining brackets (29).

5. An anti-skid device according to one of the claims 1 to 4, **characterised in that** the guide chain links (23) are closed per se or open.

6. An anti-skid device according to one of the claims 1 to 5, **characterised in that** the height (h) of the guide chain links (23) corresponds to the height (h) of the chain links (11) of the chain strands (9).

## Revendications

1. Dispositif anti-glissement destiné à des roues de véhicule automobile, comportant un mécanisme de sécurité à chaîne muni de deux brins de chaînes annulaires (9), rigides et entourant les pneus (1), devant être appliqués sensiblement dans la direction circonférentielle des pneus (L) sur la surface de roulement des pneus (5), lesquels sont maintenus à une distance réciproque par des éléments d'écartement (13), ainsi que d'étriers de maintien (29) fixés en forme d'étoile sur une bague de soutien rotatoire sur la roue du véhicule automobile et dont les extrémités libres (27) sont reliées chacune à un maillon intermédiaire (15) qui relie les deux brins de chaînes (9), **caractérisé en ce que** le maillon intermédiaire (15) se trouve entre les deux brins de chaînes (9) et **en ce qu'**un maillon de la chaîne de guidage (23) est mis en place entre le maillon intermédiaire (15) et l'extrémité libre (27) des étriers de maintien (29), lequel relie entre eux l'étrier de maintien (29) et le maillon intermédiaire (15) en articulation, de telle sorte que des charges alternantes ne puissent pas être transmises sur les étriers de maintien (29) depuis le maillon intermédiaire (15).

2. Dispositif anti-glissement selon la revendication 1, **caractérisé en ce que** les maillons intermédiaires (15) maintiennent les brins de chaînes (9) en forme de croix.

3. Dispositif anti-glissement selon la revendication 1, **caractérisé en ce que** les maillons intermédiaires (15) comportent une plaquette qui présente deux perçages (19) ménagés à distance et dans lesquels les derniers maillons de chaîne (11) des deux brins de chaînes (9) sont maintenus respectivement.

4. Dispositif anti-glissement selon la revendication 3, **caractérisé en ce que** les maillons de la chaîne de guidage (23) sont maintenus dans un évidement (17) ménagé sur la plaquette et dans un trou (25) sur l'extrémité (27) des étriers de maintien (29).

5. Dispositif anti-glissement selon l'une des revendications 1 à 4, **caractérisé en ce que** les maillons de la chaîne de guidage (23) sont fermés ou ouverts en soi.

6. Dispositif anti-glissement selon l'une des revendications 1 à 5, **caractérisé en ce que** la hauteur (h) des maillons de la chaîne de guidage (23) correspond à la hauteur (h) des maillons de chaîne (11) des brins de chaînes (9).
